# EUROPEAN PATENT APPLICATION

(11) **EP 4 848 210 A1**
(43) Date of publication of application: **02.12.2026**
(21) Application number: 25305764.0
(22) Date of filing: 27.05.2025
(51) Int. Cl.: G06T 9/00, H04N 19/597

(54) **HAPTIC PROXIES TO SIMPLIFY AVATAR REPRESENTATION**

(71) Applicant: InterDigital CE Patent Holdings, SAS, 75017 Paris (FR)
(72) Inventor: LECUYER, Gurvan, 35000 RENNES (FR); CAZUC, Ewen, 35200 RENNES (FR); COVA REGATEIRO, João Pedro, 35220 CHATEAUBOURG (FR); GALVANE, Quentin, 35235 THORIGNE-FOUILLARD (FR)
(74) Representative: Vossius & Partner Patentanwälte Rechtsanwälte mbB

(57) **Abstract**

Systems, methods, and instrumentalities are associated with haptic proxies to simplify avatar representation. In examples, a device may be configured to obtain a user avatar, a set of haptic setup parameters, and a set of haptic user preferences associated with the user avatar. The device may segment a portion of the user avatar into segments based on the set of haptic setup parameters and the set of haptic user preferences. The device may, using the segments, generate primitive shapes. Each primitive shape may correspond to a segment in the segments. The device may generate a representation based on the primitive shapes.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are associated with haptic proxies to simplify avatar representation. In examples, a device may be configured to obtain a user avatar, a set of haptic setup parameters, and a set of haptic user preferences associated with the user avatar. The device may segment a portion of the user avatar into segments based on the set of haptic setup parameters and the set of haptic user preferences. The device may, using the segments, generate primitive shapes. Each primitive shape may correspond to a segment in the segments. The device may generate a representation based on the primitive shapes.

The set of haptic setup parameters may include a set of haptic actuators, and each haptic actuator of the set of haptic actuators may be associated with a respective set of haptic modalities. A position of each actuator of the set of actuators may serve as a centroid and a starting point for segmentation. A shape of a segment of the segments may be determined based on an actuator orientation associated with the corresponding actuator of the set of actuators. The segments may be respectively associated with the set of haptic actuators, and the portion of the user avatar may be segmented based on positions of the set of haptic actuators.

The device may determine whether at least two segments of the segments overlap based on a spatialization value. The user avatar may include a geometric representation of the user avatar, and the portion of the user avatar may be segmented based on the geometric representation being used.

The geometric representation may include at least one of vertices, faces, or points. Generating the primitive shapes may include generating a primitive shape based on one or more segments of the segments of the user avatar.

The set of haptic user preferences may include at least one of an intensity range parameter, a just-noticeable-difference parameter, a spatialization value, a spatial spread value, or a sustain value. The set of haptic setup parameters may include at least one of one or more modalities, a localization parameter, a power parameter, or an orientation parameter.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example pipeline.
FIG. 5 includes example actuator positions on the haptic vest (left) and the resulting starting point or the segmentation (right).
FIG. 6 includes levels of a space density parameter.
FIG. 7 includes an example generation of primitives given the level of space density desired.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

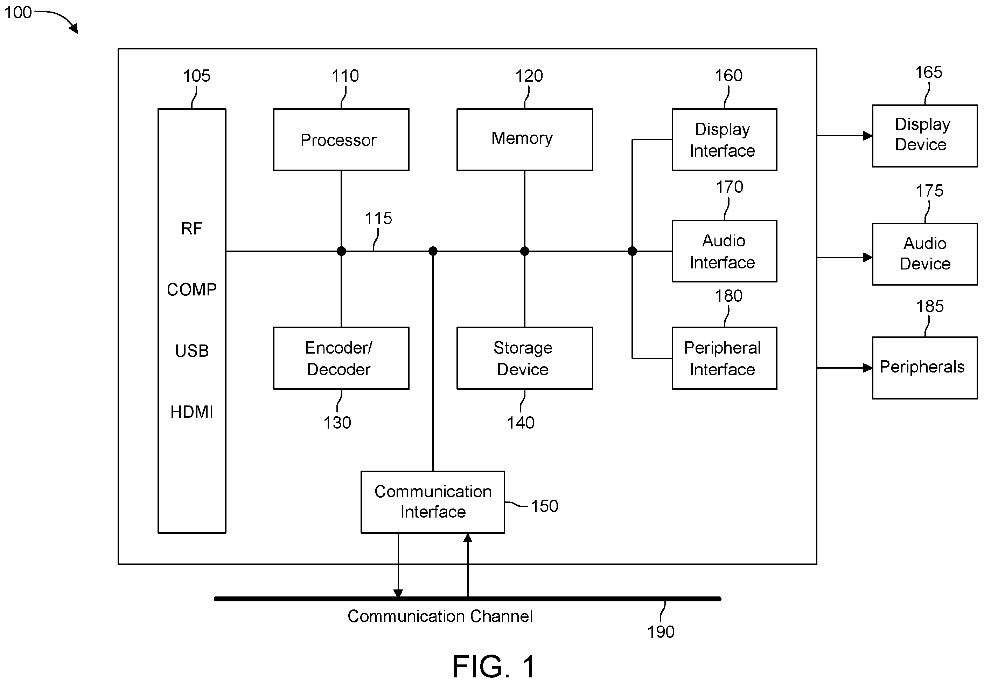

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

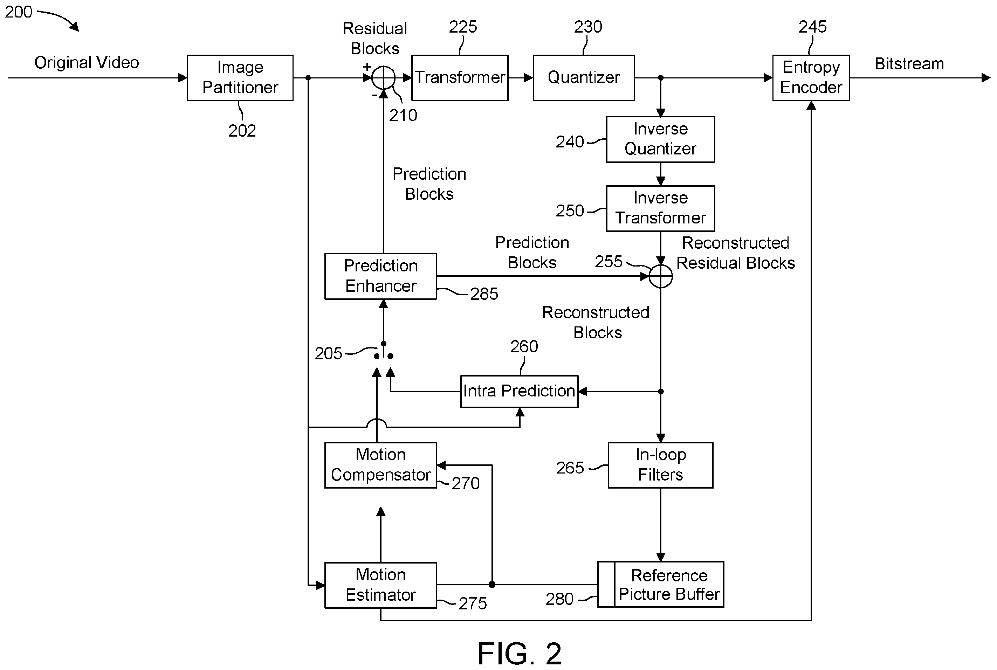

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

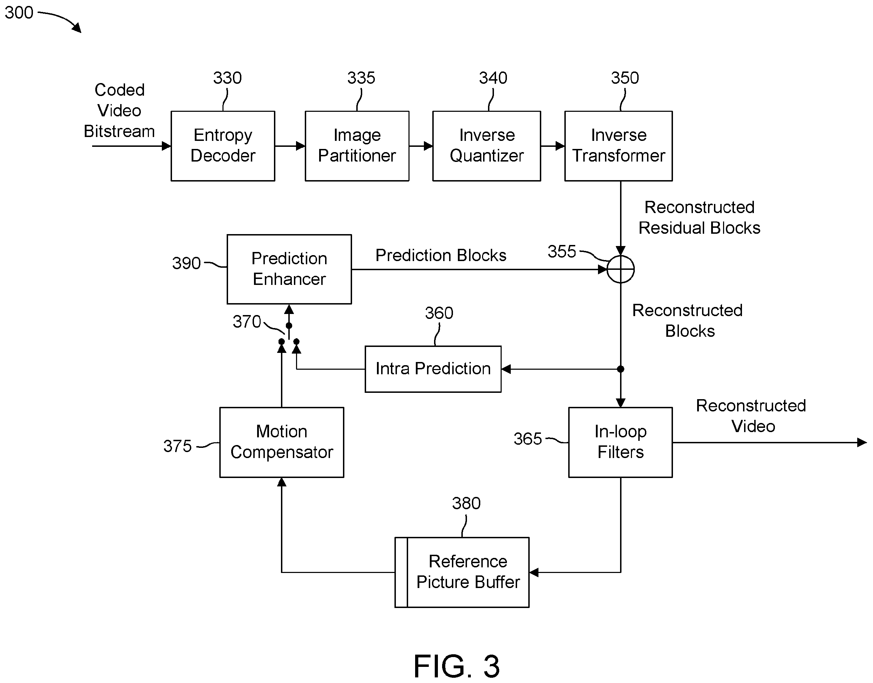

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

In virtual environments, avatars may serve as digital proxies for users, enabling interaction, communication, and embodiment within immersive spaces. The avatars may be represented using data structures, such as meshes, point clouds, or geometric abstractions, for example, depending on the application's requirements and the desired level of realism. Avatars may play a role in applications, including entertainment, metaverse, or telecommunication, for example.

To deepen the sense of embodiment (e.g., the feeling that the virtual body is truly one's own), haptic feedback may be integrated into avatar systems. Haptic systems may provide tactile and/or force-based sensations that mirror physical interactions in the virtual world. Such sensory input may reinforce the illusion of presence by aligning visual and proprioceptive cues with touch, making interactions feel natural and immersive (e.g., more natural and immersive). For example, when a user's avatar touches a virtual object, haptic devices may simulate the texture, resistance, or impact of that object, enhancing realism and emotional engagement.

As applications evolve, so may technical properties associated with avatar representation, including computational efficiency, personalization, and support for multimodal interaction.

Interaction within virtual environments may be managed through physics engines that are responsible for simulating real-world behaviors such as collision detection. The engines may rely on geometric representations of objects, and the complexity of these representations may impact computational performance. The use of complex meshes, such as convex shapes, may be computationally intensive.

Various generic avatar representations (e.g., Morgan) may be based on templated meshes. The meshes may have semantically ordered vertices that allow for precise localization of collisions. With over 200,000 vertices, such meshes may be inherently complex and may be associated with substantial computational resources to be processed in real-time by physics engines. The level of performance may not be accessible to all users, for example, those with limited hardware capabilities. To address this, in certain systems the levels of detail (LOD) may be used that may provide multiple versions of the same mesh with a decreasing number of vertices. While this mechanism may reduce the computational power required to manipulate the model, it may not prevent the formation of convex topologies in the mesh. Such formation of convex topologies may pose key challenges regarding collision detection).

Applications, such as haptic feedback systems, may demand low latency to maintain a seamless user experience. To meet such low latency requirements, developers may resort to using shapes or mathematical abstractions that may simplify collision detection and reduce computational load. Accurately representing an avatar using such forms may involve extensive manual work and, at times, arbitrary design decisions.

In haptic applications, multiple specialized representations may be used of the same avatar, which may further compound the challenges. Haptic devices may support various modalities-such as force feedback, vibration, or thermal cues-each may be associated with a distinct representation with potentially varying topology and level of details. This may affect effort needed for determining (e.g., defining) and maintaining the representations.

Avatar representations may be fixed and uniform across (e.g., all) users, (e.g., offering little to no customization). Users may have different preferences or requirements. For example, some users may prefer overlapping primitives for a cohesive feel, and some users may opt for non-overlapping shapes to clarity or reduced ambiguity.

In examples, a workflow may be used to automatically generate an avatar representation using a combination of primitives using user preferences and parameters to affect (e.g., constrain) the generation process. In examples, the clustering of the avatar vertices into small subset of vertices and the generation of mathematical object, called a primitive, may be used to represent a cluster of vertices. The following may include user preferences and haptic devices information parameters that may be used to guide constrain the primitive's generation. A pipeline may be used to automatically infer a set of primitives to represent a given avatar for a given user and its haptic setup.

Features described herein may include user haptic preferences,

Haptic perception may vary (e.g., vary significantly) from person to person, influenced by factors such as occupational exposure, recreational activities, and innate physiological differences. The variables may affect tactile acuity, sensory thresholds, and the subjective interpretation of haptic feedback. A list of parameters may be set for a user to customize the haptic representation to fit the user preferences. Table 1 shows the list of the parameters that may be used to fine-tune a haptic experience.

**Table 1: Possible list of parameters to represent user preferences to be used to customize the haptic representation of the avatar.**

| Parameter | Description |
|---|---|
| Intensity Range | Intensity range may be the user-specific range of haptic signal strength, from the minimum perceptible intensity to the maximum tolerable level. This parameter may allow for personalized calibration of haptic feedback, such that stimuli remains perceptible and comfortable. Intensity range may play a role in adapting the system to individual sensitivity thresholds and affecting (e.g., enhancing) the overall user experience |
| JND (Just Noticeable Difference) | JND may represent the smallest detectable difference in haptic intensity that a user can perceive. A variation in intensity below this threshold may be imperceptible, making it a parameter for fine-tuning feedback resolution. This value may be user-specific and help that changes in haptic stimuli to be meaningful and perceptible. This value may be different for different body parts. |
| Spatialization | Spatialization may be a parameter that determines the degree to which haptic feedback is localized to the actuator closest to the stimulus source. A great (e.g., high) value corresponds to localized feedback, where the nearest actuator is activated, affecting (e.g., enhancing) spatial precision. A value of 0 may result in generalized feedback distributed across actuators, reducing spatial specificity. The parameter may reflect the user's preference for either pinpointed or more diffuse tactile sensations. |
| Spatial spread | Spatial spread may be a parameter that determines the extent to which a haptic stimulus, initially localized to a single actuator, propagates over time to neighboring actuators within a spatial haptic setup. When the spatial spread is greater than zero, the initial signal diffuses spatially, activating adjacent actuators with a decaying intensity profile based on their distance from the origin point and the temporal evolution of the spread. This creates a sensation of tactile diffusion or expansion across the body surface. |
| Sustain | Sustain is a parameter that determines the duration during which a haptic signal maintains a relatively constant amplitude level after the initial transient phases (such as onset or attack) and before it begins to decay or release. A value of 0 indicates no sustain. This parameter may shape the temporal profile of the haptic feedback, contributing to the perceived continuity and intensity of the stimulus. |

Features described herein may include haptic setup parameters. The haptic setup may refer to the haptic interface worn or held by the user, enabling an experience to deliver tactile feedback. The haptic setup may include one or multiple haptic devices, which may be produced by the same manufacturer or by (e.g., different) companies. A haptic device may be characterized by factors, including the supported haptic modalities (e.g., vibrotactile, electrotactile, kinesthetic, thermal, or pressure-based feedback), the number and placement of actuators, and the capabilities of those actuators.

As such, for a haptic experience, the haptic setup may range from a configuration-such as a single vibration motor embedded in a mobile phone-to a (e.g., complex) system. These may include, for example, a headset with vibrators embedded in the earpieces, a haptic glove capable of delivering pressure and temperature feedback, or a haptic vest equipped with (e.g., multiple) actuators distributed across the body.

Features described herein may include a haptic setup and characteristics associated with the haptic setup. The haptic setup may include a list of haptic actuators as shown in Table 2. A haptic actuator may be described using a list of parameters details in Table 3.

**Table 2: Haptic setup parameters**

| Parameter | Description |
|---|---|
| Actuators | The list of haptic actuators in the haptic setup used to experience a content. |

**Table 3: Haptic actuator using parameters**

| Parameter | Description |
|---|---|
| Modalities | The haptic modalities that the actuators are supporting. The Enum value may be: |
| | Vibrotactile |
| | Electrotactile |
| | Kinesthetic |
| | Temperature |
| | Pressure |
| Localization | The localization on the user body of the actuator |
| Power | A value that may indicate the maximum haptic feedback the actuator is able to provide |
| Orientation | The orientation of the haptic feedback provided by the actuator |

Features described herein may be associated with generating a haptic proxy. In examples, extraction (e.g., automatic extraction) of a haptic avatar representation (e.g., a simplified haptic avatar representation) may be based on the following process (e.g., two-step process). A user avatar may be subdivided into smaller parts, and each part of the user avatar may be approximated using one or more primitive shapes.

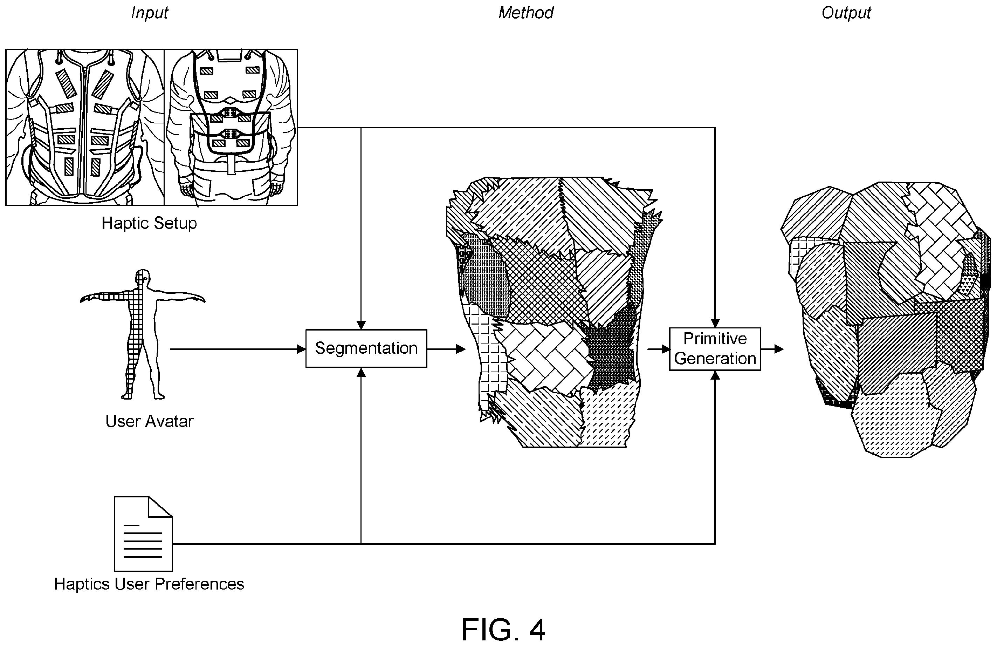

FIG. 4 is an example pipeline. On the left is an example input, the haptic setup, the user avatar, and the user haptic preferences. The middle is an example segmentation and primitive generation using the input. On the right an example result.

The subdivision process may be performed for a (e.g., each) haptic modality supported by the haptic setup. A (e.g., each) resulting segment may correspond to an actuator (e.g., a specific actuator) associated with that modality, enabling modality-specific mapping of haptic feedback across the avatar. The segmentation of the avatar may vary based on the representation used. In an example, a mesh be used to represent an avatar. In such a case, the segmentation may be based on the vertices or on the faces. in an example, a representation may use a cloud point. In such a case, the segmentation may be based on the points. The segmentation may be adapted to any type of avatar representation. Features described herein may be adapted to segmentation and clustering techniques such as region growing, spectral clustering, and the shape diameter function. In examples, clustering approaches like the k-means algorithm, as well as modern learning-based methods may be used.

Features described herein may be constrained using the haptic setup and the user haptic preferences. For a (e.g., each) haptic modality, the number of actuators may be used to determine the number of segments into which the user avatar is subdivided. The position of an actuator may serve as a centroid and a starting point of the segmentation. The power value may be used to constrain the maximum size of the segment by limiting the distance to the centroid, such that feedback remains within the actuator's effective range. In examples, the shape of a segment may be influenced by an actuator orientation may. In an example, depending on the direction in which the actuator is oriented, a segment may extend asymmetrically, favoring one or more directions over others. The user's haptic preference for spatialization may influence whether segments on the avatar are allowed to overlap and to what extent. With a low spatialization value, segments may overlap, allowing areas of the avatar to be associated with multiple actuators and thus receive (e.g., more) generalized feedback. A high spatialization value may enforce (e.g., strict) boundaries, such that a part of the avatar belongs to a segment, resulting in (e.g., more) localized and (e.g., distinct) haptic feedback.

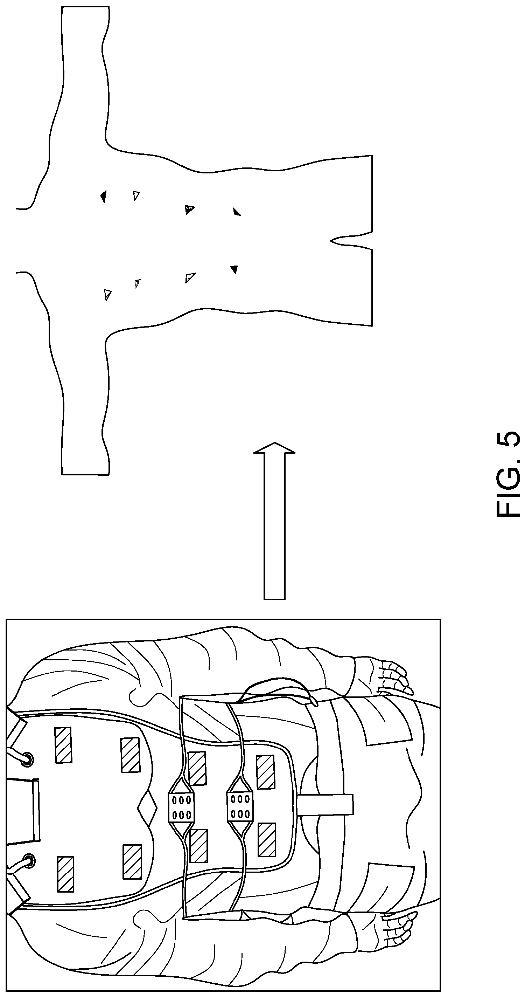

FIG. 5 includes example actuator positions on the haptic vest (left) and the resulting starting point or the segmentation (right). In this example, various actuators are illustrated to be positioned across various positions of a torso of an avatar.

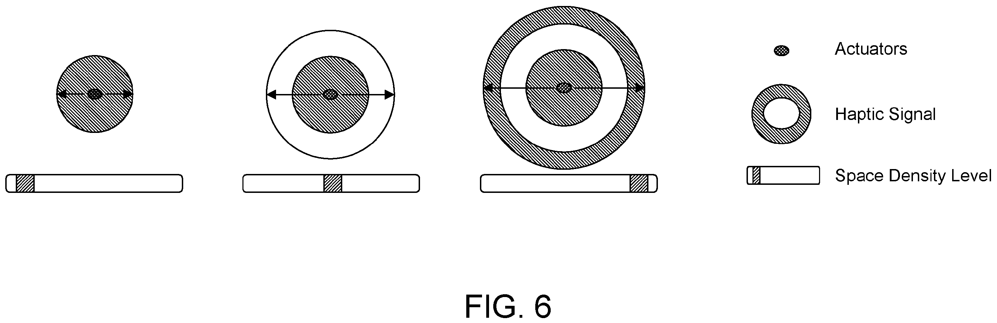

FIG. 6 illustrates various levels of a space density parameter. Varying the space density parameter may represent different space density levels. As illustrated in FIG. 6, a haptic signal (e.g., the strength of a haptic signal) may be based on the space density level.

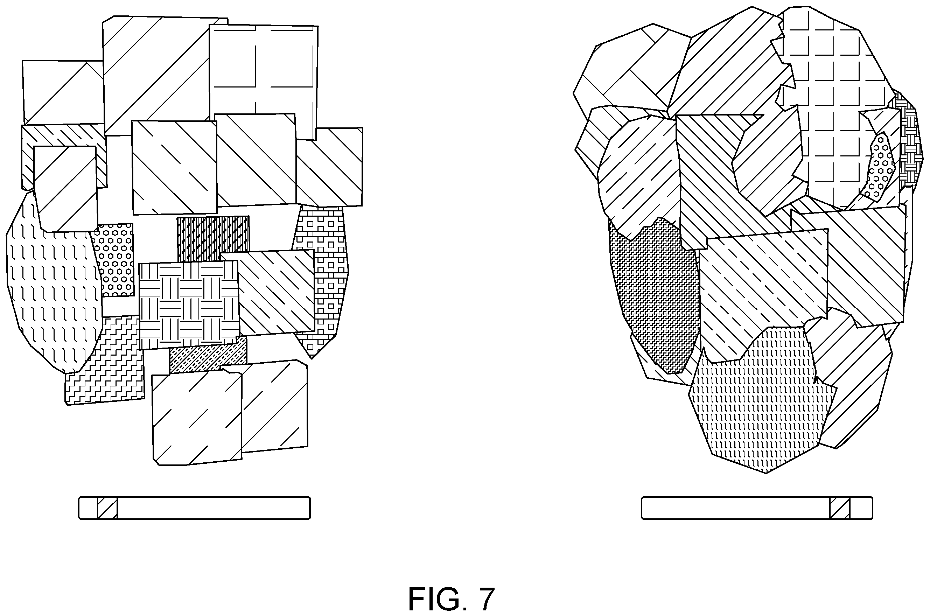

FIG. 7 illustrates examples of generation of primitives based on the desired level of space density. On the left is an example with a lower level of space density, where the primitives may be loosely arranged. On the right is an example with a higher level of space density, where the primitives may be tightly arranged.

A segment of the avatar may be approximated with one or more primitive shapes. The approximation may be achieved using least squares fitting, Hough transform, RANSAC, or regression strategies (e.g., such as learning based).

The generation of a primitive may be based on the segments extracted (e.g., at a first step). The subparts of the mesh are used as an input (e.g., of a second step). A representation may be an output based on a primitive for a haptic modality present in the haptic setup. A representation may include a set of one or more primitive shapes.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device comprising:
a processor configured to:
obtain a user avatar, a set of haptic setup parameters, and a set of haptic user preferences associated with the user avatar;
segment a portion of the user avatar into a plurality of segments based on the set of haptic setup parameters and the set of haptic user preferences;
using the plurality of segments, generate a plurality of primitive shapes, wherein each primitive shape corresponds to a segment in the plurality of segments; and
generate a representation based on the plurality of primitive shapes.

2. The device of claim 1, wherein the set of haptic setup parameters comprises a set of haptic actuators, and wherein each haptic actuator in the set of haptic actuators is associated with a respective set of haptic modalities.

3. The device of claim 2, wherein a position of each actuator of the set of actuators serves as a centroid and a starting point for segmentation.

4. The device of claim 2, wherein a shape of a segment of the plurality of segments is determined based on an actuator orientation associated with the corresponding actuator of the set of actuators.

5. The device of claim 2, wherein the plurality of segments are respectively associated with the set of haptic actuators, and wherein the portion of the user avatar is segmented based on positions of the set of haptic actuators.

6. The device of claim 3, wherein the processor is configured to determine whether at least two segments of the plurality of segments overlap based on a spatialization value.

7. The device of claim 1, wherein the processor being configured to generate the plurality of primitive shapes comprises the processor being configured to generate a primitive shape based on one or more segments of the plurality of segments of the user avatar.

8. A method comprising:
obtaining a user avatar, a set of haptic setup parameters, and a set of haptic user preferences associated with the user avatar;
segmenting a portion of the user avatar into a plurality of segments based on the set of haptic setup parameters and the set of haptic user preferences;
using the plurality of segments, generate a plurality of primitive shapes, wherein each primitive shape corresponds to a segment in the plurality of segments; and
generating a representation based on the plurality of primitive shapes.

9. The method of claim 8, wherein the set of haptic setup parameters comprises a set of haptic actuators, and wherein each haptic actuator in the set of haptic actuators is associated with a respective set of haptic modalities.

10. The method of claim 9, wherein position of each actuator of the set of actuators serves as a centroid and a starting point for segmentation.

11. The method of claim 9, wherein a shape of a segment of the plurality of segments is determined based on an actuator orientation associated with the corresponding actuator of the set of actuators.

12. The method of claim 9, wherein the plurality of segments are respectively associated with the set of haptic actuators, and wherein the portion of the user avatar is segmented based on positions of the set of haptic actuators.

13. The device of claim 1 or the method of claim 8, wherein the user avatar comprises a geometric representation of the user avatar, and wherein the portion of the user avatar is segmented based on the geometric representation being used.

14. The device of claim 1 or the method of claim 8, wherein the user avatar comprises a geometric representation of the user avatar, and wherein the geometric representation comprises at least one of: vertices, faces, or points.

15. The device of claim 1 or the method of claim 8, wherein the set of haptic user preferences comprises at least one of an intensity range parameter, a just-noticeable-difference parameter, a spatialization value, a spatial spread value, or a sustain value, wherein the set of haptic setup parameters comprises at least one of one or more modalities, a localization parameter, a power parameter, or an orientation parameter.
